# EUROPÄISCHE PATENTANMELDUNG

(11) **EP 4 122 670 A1**
(43) Veröffentlichungstag der Anmeldung: **25.01.2023**
(21) Anmeldenummer: 21187523.2
(22) Anmeldetag: 23.07.2021
(51) Int. Cl.: B29C 45/14, H01Q 1/42, H01Q 1/02, B29C 33/12, G01S 13/931, B29L 31/34

(54) **VERFAHREN ZUR HERSTELLUNG EINER KUNSTSTOFFABDECKUNG MIT EINER ELEKTRISCHEN LEITERBAHN**

(71) Anmelder: Weißer und Grießhaber Gesellschaft mit beschränkter Haftung, 78087 Mönchweiler (DE)
(72) Erfinder: SCHMID, Jochen, 78087 Mönchweiler (DE); BREITHAUPT, Jochen, 78087 Mönchweiler (DE); BRINKHUS, Christian, 78087 Mönchweiler (DE)
(74) Vertreter: Zurhorst, Stefan

(57) **Zusammenfassung**

Die Erfindung betrifft ein Verfahren zur Herstellung einer Kunststoffabdeckung (1) mit einer elektrischen Leiterbahn (2) und mit mindestens einem Kontaktstift (4), sowie eine nach diesem Verfahren hergestellte Kunststoffabdeckung (1). In eine erste Werkzeughälfte (11) eines Spritzgießwerkzeuges (9) wird der Kunststoffrohling (7) als Einlegeteil derart eingelegt, dass seine Innenseite mit der Leiterbahn (2) im Spritzraum (10) liegt. In eine zweite Werkzeughälfte (12) wird der mindestens eine Kontaktstift (4) als Einlegeteil derart eingelegt, dass sein freier Kontaktabschnitt (5) außerhalb des Spritzraumes (10) liegt. Das Spritzgießwerkzeug (9) wird durch Zusammenfahren der beiden Werkzeughälften (11, 12) geschlossen, und der mindestens eine Kontaktstift (4) wird mit seinem inneren Kontaktabschnitt (6) gegen die Kontaktfläche (3) der Leiterbahn (2) gedrückt. In den Spritzraum (10) wird Kunststoff eingespritzt, so dass die Innenseite des Kunststoffrohlings (7) mit der Leiterbahn (2) überspritzt und dabei eine Deckschicht (8) der Kunststoffabdeckung (1) gebildet wird.

## Beschreibung

Die Erfindung betrifft ein Verfahren zur Herstellung einer Kunststoffabdeckung mit einer elektrischen Leiterbahn und mit mindestens einem Kontaktstift sowie eine nach einem solchen Verfahren hergestellte Kunststoffabdeckung.

In zahlreichen Anwendungen kommen Kunststoffabdeckungen zum Schutz von darunter liegenden Komponenten zum Einsatz, wobei solche Kunststoffabdeckungen je nach Bedarf mit elektrischen Leiterbahnen zu versehen sind. Antennenlinsen oder Kunststoff-Radome von Radar- oder Lidar-Systemen insbesondere für Kraftfahrzeuganwendungen werden beispielsweise mit einer solchen Leiterbahn als Heizdraht versehen, um Schnee- bzw. Eisbeläge zu vermeiden oder zu entfernen. Hierzu wird eine solche Leiterbahn auf einen Kunststoffrohling aufgebracht. Zumindest die Seite mit der Leiterbahn wird anschließend mit Kunststoff überspritzt. Es entsteht eine monolithische Einheit, die gut vor Umwelteinflüssen geschützt ist. Problematisch ist jedoch die Kontaktierung der eingespritzten Leiterbahn, um Anschlüsse beispielsweise mit einer Stromversorgung zu realisieren.

Aus der DE 197 24 320 B4 ist ein Verfahren zur Herstellung einer heizbaren Antennenlinse bekannt, deren Heizdraht in oben beschriebener Weise überspritzt wird. Der Grundkörper davon enthält Bohrungen zur späteren Anbringung von Heizkontaktierungen. Die DE 10 2014 002 438 A1 offenbart ein Herstellverfahren für ein Kunststoff-Radom eines Kraftfahrzeugs, wobei ein Folienstück mit einem elektrisch leitenden Draht hinterspritzt wird. Das Hinterspritzen erfolgt derart, dass zumindest eine Aussparung für ein Kontaktelement nicht hinterspritzt wird.

In den beiden vorgenannten Fällen wird zunächst das Hinterspritzen durchgeführt. Am solchermaßen vorbereiteten und aus der Spritzgießform entnommenen Kunststoffteil erfolgt dann anschließend die Anbringung von geeigneten Kontakten. Dies ist mit zusätzlichen Arbeitsschritten verbunden, was einerseits einen entsprechenden Aufwand mit einhergehenden Kosten bedeutet, und was andererseits eine potentielle Fehlerquelle darstellt.

Der Erfindung liegt die Aufgabe zugrunde, ein Verfahren zur Herstellung einer Kunststoffabdeckung anzugeben, welches einfacher, schneller und zuverlässiger durchzuführen ist.

Diese Aufgabe wird durch ein Verfahren mit den Merkmalen des Anspruchs 1 gelöst.

Der Erfindung liegt des Weiteren die Aufgabe zugrunde, eine Kunststoffabdeckung mit einer elektrischen Leiterbahn und mit mindestens einem Kontaktstift anzugeben, welche einfacher, schneller und zuverlässiger gefertigt werden kann.

Diese Aufgabe wird durch eine Kunststoffabdeckung mit den Merkmalen des Anspruchs 11 gelöst.

Die Erfindung folgt dem Leitgedanken, die elektrische Kontaktierung nicht erst nach dem Hinterspritzen der Leiterbahn außerhalb der Spritzgießform vorzunehmen, sondern bereits im geschlossenen Spritzgießwerkzeug eine elektrische Verbindung der Leiterbahn und des zugehörigen Kontaktstiftes miteinander vorzunehmen. Im Einzelnen ist dazu vorgesehen, dass zunächst die Leiterbahn auf eine Innenseite eines Kunststoffrohlings aufgebracht wird. In eine erste Werkzeughälfte des Spritzgießwerkzeuges, welche in einem geschlossenen Zustand des Spritzgießwerkzeuges einen Spritzraum begrenzt, wird nun der solchermaßen vorbereitete Kunststoffrohling als Einlegeteil derart eingelegt, dass seine Innenseite mit der Leiterbahn im Spritzraum liegt. In eine zweite Werkzeughälfte, welche im geschlossenen Zustand des Spritzgießwerkzeuges ebenfalls den genannten Spritzraum begrenzt, wird der mindestens eine Kontaktstift als Einlegeteil derart eingelegt, dass sein freier Kontaktabschnitt außerhalb des Spritzraumes liegt und deshalb beim späteren Spritzgießvorgang nicht umspritzt wird, also frei bleibt.

Das Spritzgießwerkzeug wird nun durch Zusammenfahren der beiden Werkzeughälften geschlossen, so dass sich der Spritzraum bildet. Außerdem wird der mindestens eine Kontaktstift mit seinem inneren Kontaktabschnitt gegen die Kontaktfläche der Leiterbahn gedrückt. In dem solchermaßen vorbereiteten Spritzraum wird nun Kunststoff eingespritzt, so dass die Innenseite des Kunststoffrohlings mit der Leiterbahn überspritzt und dabei eine Deckschicht der Kunststoffabdeckung gebildet wird. Das Spritzgießwerkzeug wird schließlich geöffnet, und die solchermaßen gebildete Kunststoffabdeckung wird einschließlich des mindestens einen Kontaktstiftes aus dem Spritzgießwerkzeug entnommen, wobei in diesem Zustand bereits eine zumindest berührende elektrische Kontaktierung zwischen dem Kontaktstift und der Leiterbahn besteht.

Der zusätzliche Arbeitsschritt einer nachfolgenden Anbringung und Kontaktierung eines Kontaktstiftes entfällt vollständig. Durch die zusätzliche Nutzung des Spritzgießwerkzeuges nicht nur für das Hinterspritzen, sondern auch für die Positionierung des Kontaktstiftes ist eine lagegenaue gegenseitige Ausrichtung von Kontaktstift und Leiterbahn sichergestellt. Fehlmontagen können ausgeschlossen werden, ohne dass ein zusätzlicher Aufwand erforderlich wäre. Das Spritzgießwerkzeug bzw. dessen Spritzraum schützt die Kontaktstelle zuverlässig gegen Fremdeinflüsse. Insgesamt ist das Verfahren schnell, kostengünstig und zuverlässig insbesondere unter den Bedingungen einer Großserienfertigung einsetzbar.

Je nach Ausgestaltung der Kunststoffabdeckung bzw. des Spritzgießwerkzeuges kann es zweckmäßig sein, den Kontaktstift in der zweiten Werkzeughälfte fest zu halten. Der Kontaktstift wird dann räumlich exakt fixiert zur Kontaktfläche der Leiterbahn ausgerichtet und positioniert. Lagetoleranzen oder dergleichen können in einem solchen Fall durch ein geeignetes nachgiebiges Kontaktierungssubstrat oder in anderer Weise wie beispielsweise durch einen nachgiebigen Abschnitt des Kontaktstiftes ausgeglichen werden. In bevorzugter Weiterbildung wird jedoch der mindestens eine Kontaktstift in der zweiten Werkzeughälfte derart positioniert und gehalten, dass sein innerer Kontaktabschnitt zunächst um einen Ausgleichsweg gegenüber der späteren kontaktierten Position hervorsteht, dass der innere Kontaktabschnitt beim Schließen des Spritzgießwerkzeuges gegen die Kontaktfläche der Leiterbahn gedrückt wird, wobei der Kontaktstift unter Ausnutzung zumindest eines Teils des Ausgleichsweges beim Schließen des Spritzgießwerkzeuges gegen eine Vorspannkraft eines Federelementes zurückgedrückt wird, und wobei der innere Kontaktabschnitt während des nachfolgenden Hinterspritzens durch die Vorspannkraft des Federelementes auf der Kontaktfläche der Leiterbahn gehalten wird. Hierzu kann der Kontaktstift beispielsweise Weg-Kraft-abhängig voreilend auf die genannte Kontaktfläche gedrückt werden. Durch den Verzicht auf ein separates Nachschieben des Kontaktstiftes wird also allein die Schließbewegung des Spritzgießwerkzeuges für die Kontaktierung genutzt, wodurch einerseits die Konstruktion des Werkzeuges einfach gehalten werden kann, und wodurch andererseits der Prozess insgesamt sehr einfach und schnell gehalten ist.

In einer vorteilhaften Alternative zur Verwendung des genannten Federelementes wird der innere Kontaktabschnitt des Kontaktstiftes beim Schließen oder nach dem Schließen des Spritzgießwerkzeuges mittels eines Aktuators gegen die Kontaktfläche der Leiterbahn gedrückt und während des nachfolgenden Hinterspritzens auf der Kontaktfläche der Leiterbahn gehalten. Die Verwendung eines Aktuators beispielsweise in Form eines Hydraulikzylinders für den genannten Zweck erlaubt ein nahezu beliebiges Timing des Andrückens relativ zum Vorgang des Formschließens. Außerdem können nahezu beliebige Anpresskräfte in einem frei wählbaren zeitlichen Profil realisiert werden.

Jedenfalls können durch Einsatz des Federelementes oder des Aktuators beispielsweise Form- und Lagetoleranzen ausgeglichen werden. Insbesondere kann durch die Druckbeaufschlagung mittels des Federelementes oder des Aktuators ein definierter Anpressdruck des Kontaktabschnittes an die Kontaktfläche der Leiterbahn sichergestellt werden, was für die elektrische und mechanische Kontaktierung insbesondere bei Verwendung eines zwischenliegenden Substrates vorteilhaft oder sogar notwendig ist.

Es kann zweckmäßig sein, einen Kontaktstift-Rohling zu verwenden, welcher beispielsweise einen Haltefortsatz aufweist, mit welchem der genannte Rohling in der zweiten Werkzeughälfte gehalten wird. Ein solcher Fortsatz kann dann nach Beendigung des Fertigungsvorganges abgetrennt werden. Bevorzugt wird jedoch der mindestens eine Kontaktstift in der zweiten Werkzeughälfte direkt an seinem freien Kontaktabschnitt gehalten. Dies hat u.a. den Vorzug, dass die genannte Halterung auch bewirkt, dass der freie Kontaktabschnitt nicht mit Kunststoff umspritzt wird und nach dem Umspritzen nicht eigens freigelegt werden muss. Nach dem Spritzen ist der freie Kontaktabschnitt unmittelbar und ohne Nacharbeit nutzbar.

Je nach Anwendungsfall kann es für die gewünschte elektrische Kontaktierung möglicherweise ausreichen, dass der Kontaktstift mit seinem inneren Kontaktabschnitt unmittelbar gegen die Kontaktfläche der Leiterbahn gedrückt wird. Mögliche Varianten sind form- und/oder kraftschlüssige Verbindungstechnologien. Als Beispiele seien hier SKV- oder Pressfit-Verbindungen genannt. In bevorzugter Weiterbildung kommt jedoch als Alternative oder als Ergänzung zu den vorgenannten Möglichkeiten eine elektrisch leitende stoffschlüssige Kontaktierung zum Einsatz, welche insbesondere bei geschlossenem Spritzgießwerkzeug vorgenommen wird. Hierzu kann beispielsweise ein geeignetes elektrisch leitendes Substrat auf die Kontaktstellen aufgebracht werden.

Sofern für dessen Aktivierung Wärme benötigt wird, kann diese beispielsweise mittels Wärmeleitung durch den Kontaktstift hindurch eingebracht werden. Bevorzugt werden jedoch der innere Kontaktabschnitt und/oder die Kontaktfläche vor dem Schließen des Spritzgießwerkzeuges mit einem elektrisch leitenden Substrat versehen, wobei dieses dann für die Kontaktierung, sofern erforderlich, durch Druck, insbesondere durch den Anpressdruck des Federelementes oder des Aktuators, und/oder durch Wärme, insbesondere durch die Wärme des eingespritzten Kunststoffes aktiviert werden kann. Alternativ oder zusätzlich kann die erforderliche Wärme auch mittels einer im Werkzeug separat eingebrachter, steuerbarer Heizung beispielsweise in Form von elektrischen Heizspulen eingespeist werden. Auch hier gilt, dass auf einen zusätzlichen, die Kontaktierung herbeiführenden Verfahrensschritt verzichtet werden kann, da die Kontaktierung selbsttätig im Nebeneffekt des Spritzgießvorganges eintritt. Jedenfalls ist eine dauerhafte und zuverlässige Kontaktierung sichergestellt.

Alternativ oder zusätzlich kann es zweckmäßig sein, die Kontaktierung nachträglich zu sichern. Hierzu wird beim Überspritzen der Innenseite des Kunststoffrohlings im Bereich des inneren Kontaktabschnittes und der Kontaktfläche ein Zugriffsfenster belassen. Durch dieses Zugriffsfenster wird nachträglich eine dauerhafte Verbindung zwischen dem inneren Kontaktabschnitt des Kontaktstiftes und der Kontaktfläche der Leiterbahn herbeigeführt, wozu sich insbesondere Kleben, Vergießen, Lackieren, und bedingt auch Schweißen oder Löten eignen. Solche Kontaktierungen sind prozesssicher und darüber hinaus durch das Zugriffsfenster hinsichtlich der erzielten Qualität prüfbar.

In bevorzugter Weiterbildung wird das genannte Zugriffsfenster nach Herbeiführung der dauerhaften Verbindung dauerhaft und dicht insbesondere durch Vergießen oder erneutes Umspritzen elektrisch isolierend verschlossen. Es entsteht dadurch eine hermetisch abgeschlossene Einheit, welche sicher vor Umwelteinflüssen und Korrosion geschützt ist.

Es kann zweckmäßig sein, die mechanische Fixierung des Kontaktstiftes allein durch die elektrische Kontaktierung beispielsweise in Form der oben genannten Verbindungstechnologien zu realisieren. Bevorzugt weist der Kontaktstift jedoch einen Halteabschnitt auf, wobei der Kontaktstift im Bereich seines Halteabschnittes beim Hinterspritzen der Innenseite des Kunststoffrohlings in die Deckschicht eingespritzt wird. Einerseits kann der solchermaßen fixierte Kontaktstift hohen Belastungen standhalten. Andererseits werden die auftretenden Lasten beispielsweise beim Aufstecken oder Abziehen eines Steckers nicht auf die elektrische Kontaktstelle zwischen Kontaktstift und Leiterbahn weitergeleitet, so dass die Kontaktierung nicht gefährdet ist. Die mechanische Tragfähigkeit des eingespritzten Halteabschnitts kann noch insbesondere dadurch gesteigert werden, dass durch eine geeignete geometrische Ausgestaltung eine formschlüssige Verkrallung des Halteabschnitts im Kunststoff der Deckschicht herbeigeführt wird.

Ein Ausführungsbeispiel der Erfindung ist nachfolgend anhand der Zeichnung näher beschrieben. Es zeigen:
- Fig. 1: in einer perspektivischen Übersichtsdarstellung eine erfindungsgemäße Kunststoffabdeckung,
- Fig. 2: in einer perspektivischen Detaildarstellung die Rückseite der Kunststoffabdeckung nach Fig. 1 im Bereich der elektrischen Kontaktierung,
- Fig. 3: eine Explosionsdarstellung der Kunststoffabdeckung nach den Fig. 1, 2 mit Einzelheiten eines Kunststoffrohlings mit aufgebrachter Leiterbahn, zweier Kontaktstifte und der aufzuspritzenden Deckschicht,
- Fig. 4: in einer schematischen Schnittdarstellung ein geöffnetes Spritzgießwerkzeug, in dessen erster Werkzeughälfte der Kunststoffrohling nach Fig. 3 eingelegt ist und in dessen zweiter Werkzeughälfte ein korrespondierender Kontaktstift unter Vorspannung eines Federelementes eingesetzt ist,
- Fig. 5: die Anordnung nach Fig. 4 mit geschlossenem Spritzgießwerkzeug, wobei der Kontaktstift an der Kontaktfläche der Leiterbahn des Kunststoffrohlings unter Vorspannung des Federelementes anliegt,
- Fig. 6: die Anordnung nach Fig. 5 mit ausgespritztem Spritzraum zur Bildung der Kunststoffdeckschicht bei Abdeckung der Leiterbahn und der Kontaktstellen,
- Fig. 7: eine Variante der Anordnung nach Fig. 4 mit einem hydraulischen Aktuator anstelle des zuvor gezeigten Federelementes,
- Fig. 8: die Anordnung nach Fig. 7 mit geschlossenem Spritzgießwerkzeug, wobei der Kontaktstift an der Kontaktfläche der Leiterbahn des Kunststoffrohlings unter Anpressdruck des Aktuators anliegt,
- Fig. 9: die Anordnung nach Fig. 8 mit ausgespritztem Spritzraum zur Bildung der Kunststoffdeckschicht bei Abdeckung der Leiterbahn und der Kontaktstellen.

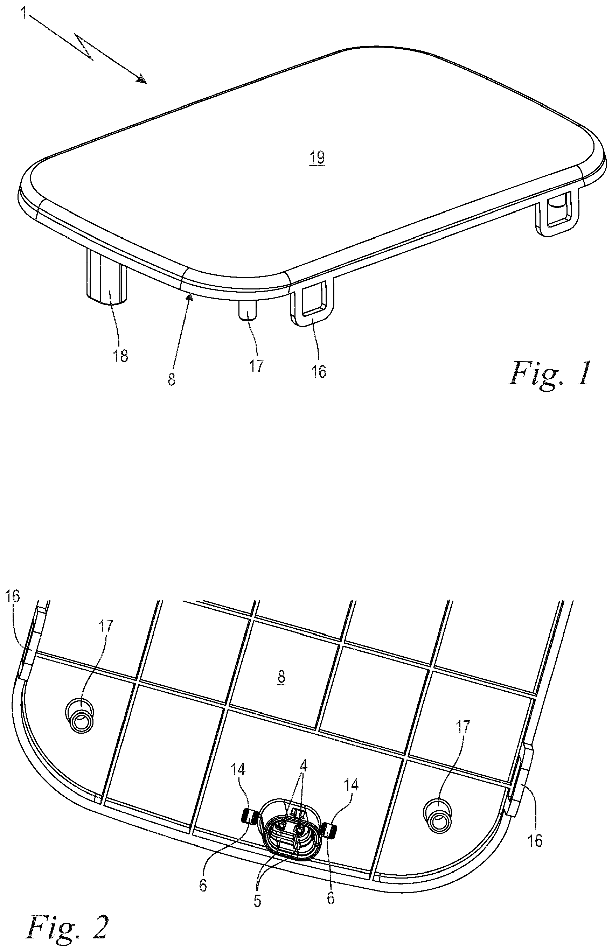

Fig. 1 zeigt in einer perspektivischen Ansicht eine erfindungsgemäße Kunststoffabdeckung 1 mit einer homogenen Oberseite 19 und mit einer in Dickenrichtung gegenüberliegenden, hier unteren Deckschicht 8. Hieran sind Haltelaschen 16, Schraubdome 17 sowie eine Steckeraufnahme 18 einteilig aus Kunststoff angeformt. Im vorliegenden Fall handelt es sich bei der Kunststoffabdeckung 1 um die Abdeckung eines Radar-Gerätes eines Kraftfahrzeuges. Im Rahmen der Erfindung können aber auch andere Anwendungsfälle einer solchen Kunststoffabdeckung 1 mit umfasst sein.

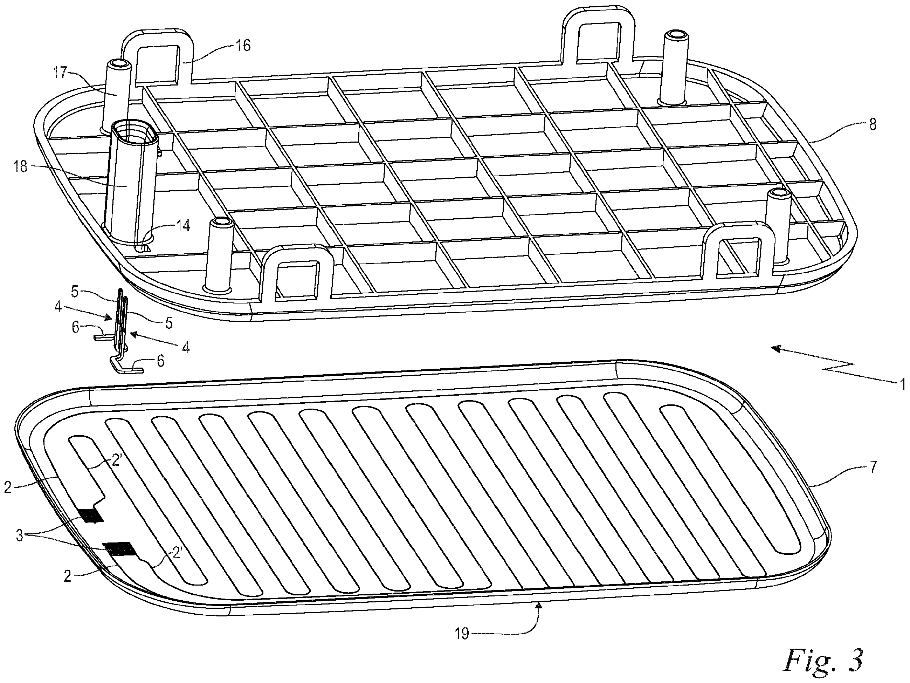

Fig. 2 zeigt in einer perspektivischen Ausschnittsdarstellung die der Oberseite 19 gegenüberliegende Seite im Bereich der Steckeraufnahme 18, welche einteilig an der unteren Deckschicht 8 angespritzt ist. Die Steckeraufnahme 18 umschließt freie Kontaktabschnitte 5 von zwei Kontaktstiften 4. Für die Inbetriebnahme wird ein nicht dargestellter elektrischer Stecker in die Steckeraufnahme 18 eingeschoben, wodurch die Kontaktstifte 4 mit elektrischer Spannung versorgt werden können. Beidseitig der Steckeraufnahme 18 befindet sich in der Deckschicht 8 je ein Zugriffsfenster 14, durch welches je ein innerer Kontaktabschnitt 6 des Kontaktstiftes 4 sowie Kontaktflächen 3 einer Leiterbahn 2 (Fig. 3) frei zugänglich sind. Einzelheiten der Zugriffsfenster 14 und deren Funktion sind weiter unten näher beschrieben.

Fig. 3 zeigt in einer Explosionsdarstellung die Kunststoffabdeckung 1 nach den Fig. 1, 2. Demnach ist die Oberseite 19 an einem Kunststoffrohling 7 ausgebildet, auf dessen der Oberseite 19 abgewandten Innenseite mindestens eine Leiterbahn 2 aufgebracht ist. Im gezeigten Ausführungsbeispiel sind zwei elektrische parallel geschaltete Leiterbahnen 2, 2' vorgesehen und mit einem Paar von Kontaktflächen 3 versehen. Bei den Leiterbahnen 2, 2' handelt es sich um Heizbahnen, welche sich bei Spannungsbeaufschlagung infolge des fließenden Stromes erwärmen und damit die Kunststoffabdeckung 1 frei von Eis und Schnee halten bzw. diese hiervon befreien. Im Rahmen der Erfindung können aber auch andere Leiterbahnen 2 beispielsweise zur Bildung einer Antenne oder ganz allgemein zur Bildung eines Stromleiters beispielsweise zur Signalübertragung vorgesehen sein.

Bei dem Kunststoffrohling 7 handelt es sich um eine durch Tiefziehen bzw. Thermoformen erzeugte 3D-Folie. Es kann sich aber auch um einen Spritzteil, ein Halbzeug oder dergleichen handeln. Je nach Bedarf kann die Oberseite 19 durch Bedrucken, Beschichten, Lackieren oder dergleichen ein gewünschtes Design oder Eigenschaft erhalten.

Ein weiterer Teil der erfindungsgemäßen Kunststoffabdeckung 1 ist mindestens ein Kontaktstift 4. Im gezeigten Ausführungsbeispiel sind zwei identische Kontaktstifte 4 vorgesehen, welche jeweils einen äußeren, freien Kontaktabschnitt 5 sowie angrenzend an die Kontaktflächen 3 der Leiterbahnen 2, 2' einen inneren Kontaktabschnitt 6 aufweisen. Im umspritzten Zustand sind die freien Kontaktabschnitte 5 von der Steckeraufnahme 18 ringsherum umschlossen, liegen ansonsten jedoch frei. Dementsprechend kann auf sie ein elektrischer Stecker unter Bildung einer elektrischen Kontaktierung aufgesteckt werden. Darüber hinaus stehen die Kontaktabschnitte 5 im umspritzten Zustand mit ihren inneren Kontaktabschnitten 6 auf den flächigen Kontaktflächen 3 der Leiterbahnen 2, 2' auf, so dass zwischen ihnen eine elektrisch leitfähige Verbindung besteht.

Im Übrigen ist in Fig. 3 noch die spritzgegossene Deckschicht 8 aus Kunststoff gezeigt, welche die Leiterbahnen 2, 2' auf der Innenseite des Kunststoffrohlings 7 abdeckt. Erkennbar ist außerdem eines der beiden optionalen Zugriffsfenster 14, welches einen Zugriff auf den darunter befindlichen inneren Kontaktabschnitt 6 des Kontaktstiftes 4 sowie auf die zugeordnete Kontaktfläche 3 der Leiterbahnen 2, 2' erlaubt.

In einem ersten Verfahrensschritt zur Herstellung der in den Fig. 1 bis 3 gezeigten Kunststoffabdeckung 1 wird zunächst die mindestens eine Leiterbahn 2 samt der mindestens einen Kontaktfläche 3 auf die Innenseite des Kunststoffrohlings 7 aufgebracht. Mit dem Begriff "Innenseite", auf dem sich die Leiterbahnen 2, 2' befinden, ist nicht die Innenseite der Kunststoffabdeckung 1 gemeint, sondern die nachher von der Deckschicht 8 abgedeckte Seite. Sofern die Leiterbahn 2 beispielsweise als Antenne wirken soll, kann es ausreichen, dass nur an einem Ende dieser Leiterbahn 2 eine einzelne Kontaktfläche 3 zur Verbindung mit einem einzelnen Kontaktstift 4 vorgesehen ist. Im gezeigten Ausführungsbeispiel handelt es sich um eine elektrische Heizbahn, an deren beiden Enden je eine Kontaktfläche 3 für je einen der beiden Kontaktstifte 4 angeordnet ist.

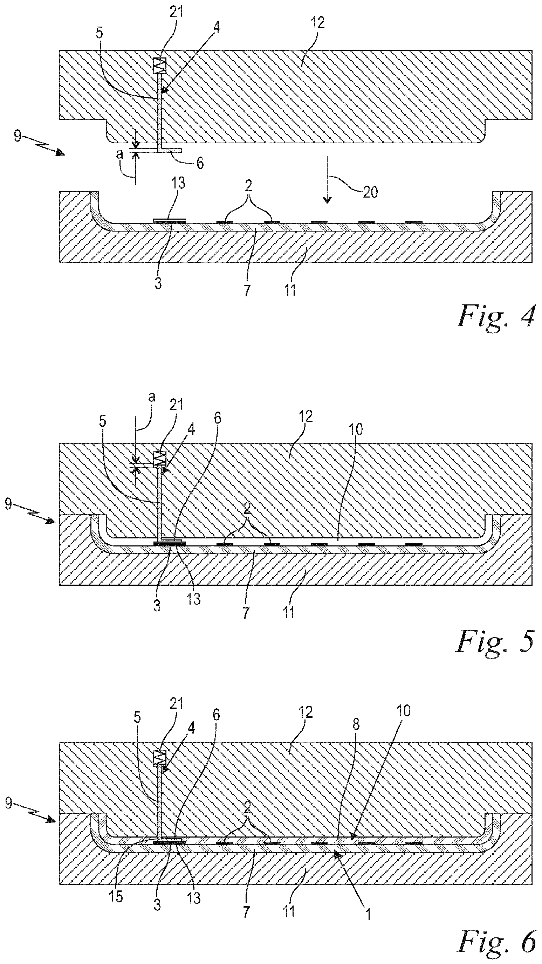

Fig. 4 zeigt in einer schematischen Schnittdarstellung ein Spritzgießwerkzeug 9 zur Ausführung der nachfolgenden Verfahrensschritte. Das Spritzgießwerkzeug 9 umfasst eine erste, hier untere Werkzeughälfte 11 sowie eine zweite, hier obere Werkzeughälfte 12. Natürlich können auch weitere Werkzeugteile wie Formschieber oder dergleichen vorgesehen sein, die hier jedoch im Dienste einer einfachen Darstellung nicht gezeigt sind. Im gezeigten Beispiel lässt sich die zweite, obere Werkzeughälfte 12 zum Schließen des Spritzgießwerkzeuges 9 in einer Schließrichtung 20 auf die erste, untere Werkzeughälfte 11 absenken. Im auf diese Weise geschlossenen Zustand des Spritzgießwerkzeuges 9 (Fig. 5), bei dem die beiden Werkzeughälften 11, 12 aneinander gefahren sind, begrenzen sowohl die erste Werkzeughälfte 11 als auch die zweite Werkzeughälfte 12 gemeinsam einen Spritzraum 10, welcher später mit Kunststoff ausgespritzt wird. Anfänglich ist jedoch das Spritzgießwerkzeug 9 entsprechend der Darstellung nach Fig. 4 geöffnet, wobei die erste Werkzeughälfte 11 und die zweite Werkzeughälfte 12 zueinander beabstandet sind. Vorbereitend wird nun in die erste Werkzeughälfte 11 der gemäß Fig. 3 vorbereitete Kunststoffrohling 7 als Einlegeteil derart eingelegt, dass seine Innenseite mit der Leiterbahn 2 und den Kontaktflächen 3 im später geschlossenen Spritzraum 10 (Fig. 5) liegt.

Außerdem wird in die zweite Werkzeughälfte 12 der mindestens eine Kontaktstift 4 als Einlegeteil derart eingelegt bzw. eingesetzt oder eingesteckt, dass sein freier Kontaktabschnitt 5 außerhalb des späteren Spritzraumes 10 liegt. Das Gleiche kann auch für den inneren Kontaktabschnitt 6 des Kontaktstiftes 4 gelten, indem er beispielsweise dort positioniert wird, wo später das Zugriffsfenster 14 (Fig. 2, 3) entsteht. Hierdurch wird erreicht, dass kein Umspritzen mit der Kunststoffschmelze beim späteren Spritzen der Deckschicht 8 stattfindet. Beispielhaft befindet sich hier jedoch der innere Kontaktabschnitt 6 ebenso wie die Kontaktfläche 3 vollständig im späteren Spritzraum 10 (Fig. 5).

Auf die Kontaktfläche 3 wird noch vor dem Schließen des Spritzgießwerkzeuges 9, also im geöffneten Zustand nach Fig. 4, ein schematisch angedeutetes elektrisch leitendes Substrat 13 auf die Kontaktfläche 3 aufgebracht. Alternativ oder zusätzlich kann ein solches Substrat 13 auch auf den inneren Kontaktabschnitt 6 des Kontaktstiftes 4 bei dessen Herstellung oder im Anschluss daran aufgebracht werden. Weitere Alternativen oder Ergänzungen dazu sind der mögliche Einsatz von kraftschlüssigen und/oder formschlüssigen Verbindungstechnologien.

Der mindestens eine Kontaktstift 4 ist in der zweiten Werkzeughälfte 12 derart positioniert und gehalten, dass sein innerer Kontaktabschnitt 6 zunächst, das heißt vor dem Schließen der Werkzeughälften 11, 12 um einen Ausgleichsweg a gegenüber der späteren kontaktierten Position bei geschlossenem Spritzgießwerkzeug 9 (Fig. 5, 6) hervorsteht, und zwar in der Schließrichtung 20. Im gezeigten Ausführungsbeispiel befindet sich bezogen auf die Richtung des Ausgleichsweges a gegenüberliegend zum Kontaktabschnitt 6 ein Federelement 21, welches mit Vorspannkraft auf den Kontaktstift 4 einwirkt und diesen zunächst in der genannten hervorstehenden Position hält.

Im Anschluss an die genannten Vorbereitungstätigkeiten werden nun die beiden Werkzeughälften 11, 12 zusammengefahren, so dass das Spritzgießwerkzeug 9 entsprechend der Darstellung nach Fig. 5 geschlossen ist. Aus der Zusammenschau der Fig. 4, 5 ergibt sich, dass beim Schließvorgang der anfänglich um den Ausgleichsweg a in der Schließrichtung 20 hervorstehende Kontaktstift 4 mit seinem inneren Kontaktabschnitt 6 in Kontakt mit der Kontaktfläche 3 der Leiterbahn 2 kommt, noch bevor das Spritzgießwerkzeug 9 vollständig geschlossen ist. Beim weiteren Schließen in der Schließrichtung 20 wird der Kontaktstift 4 unter Ausnutzung zumindest eines Teils des Ausgleichsweges a in seine Halterung in der zweiten Werkzeughälfte 12 und gegen die Vorspannkraft des Federelementes 21 zurückgedrückt. Dabei bleibt der innere Kontaktabschnitt 6 durch die Vorspannkraft des Federelementes gegen die Kontaktfläche 3 der Leiterbahn 2 gedrückt und wird dort in diesem Zustand während des nachfolgenden Hinterspritzens unter Aufbringung einer definierten Andruckkraft gehalten.

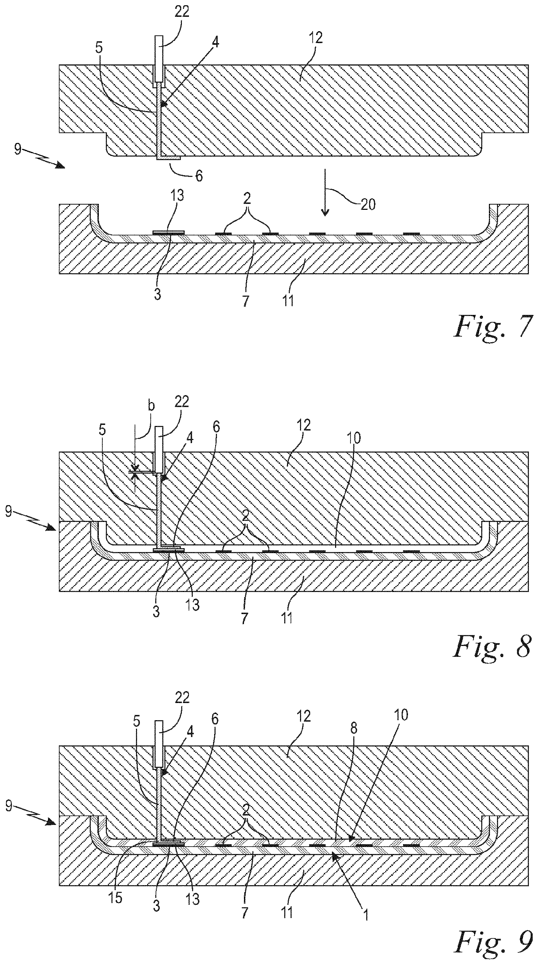

Im geschlossenen Zustand nach Fig. 5 befindet sich das elektrisch leitende Substrat 13 zunächst zwischen dem inneren Kontaktabschnitt 6 des Kontaktstiftes 4 und der Kontaktfläche 3 der Leiterbahn 2, ohne dass hier bereits eine belastbare Verbindung entstanden ist. Dies erfolgt nun im nächsten Verfahrensschritt, wobei wenn erforderlich Aktivierungswärme beispielsweise mittels Wärmeübergang durch den Kontaktstift 4 hindurch zum Substrat 13 geleitet werden kann. Hierzu oder ganz allgemein zum Eintrag der Aktivierungswärme können eine oder beide Werkzeughälften 11, 12 mit einer insbesondere elektrischen Zusatzheizung versehen sein. Vorliegend wird gemäß Fig. 6 Kunststoff in den Spritzraum 10 eingespritzt, so dass die Innenseite des Kunststoffrohlings 7 mit der Leiterbahn 2 überspritzt und dabei die Deckschicht 8 der Kunststoffabdeckung 1 (Fig. 3) gebildet wird. In der gezeigten bevorzugten Ausführung des Verfahrens reicht die mit der Kunststoffschmelze eingebrachte Wärme für die Aktivierung des Substrats 13 aus, so dass eine dauerhafte und elektrisch leitfähige Verbindung zwischen der Kontaktfläche 3 der Leiterbahn 2 und dem inneren Kontaktabschnitt 6 des Kontaktstiftes 4 entsteht. Falls zusätzlich zur Wärme oder alternativ dazu ein bestimmter Druck zur Aktivierung des Substrats 13 benötigt wird, so kann dieser beispielsweise durch die Anpresskraft des Federelementes 21 oder eines weiter unten im Zusammenhang mit den Fig. 7 bis 9 noch beschriebenen Aktuators 22 aufgebracht werden. Eine möglicherweise erforderliche Evakuierung oder Sauerstoffverdrängung des Kontaktierungsbereichs kann durch Zusatzmaßnahmen im Spritzgusswerkzeug umgesetzt werden.

Weiter ist in Fig. 6 erkennbar, dass der Kontaktstift 4 im Bereich seines inneren Kontaktabschnittes 6 einen im Spritzraum 10 liegenden Halteabschnitt 15 aufweist, welcher nun von der Kunststoffschmelze umschlossen wird, und womit der Kontaktstift 4 in die Deckschicht 8 mechanisch fest eingespritzt und aufgrund seiner Formgebung formschlüssig verkrallt wird. Genau Gegenteiliges wird dadurch bewirkt, dass der Kontaktstift 4 in der zweiten Werkzeughälfte 12 an seinem freien Kontaktabschnitt 5 gehalten wird. Dies verhindert eine Umspritzung des freien Kontaktabschnittes 5 mit der eingespritzten Kunststoffschmelze, so dass die freien Kontaktabschnitte 5 im fertigen Bauteil gemäß der Darstellung nach Fig. 2 frei liegend verbleiben.

Die erfindungsgemäße Kunststoffabdeckung 1 ist nun fertiggestellt. Nach Öffnen des Spritzgießwerkzeuges 9 kann sie einschließlich ihrer Kontaktstifte 4 entnommen und ihrer Verwendung zugeführt werden.

Das oben beschriebene Verfahren betrifft den Fall, dass die elektrisch leitende Kontaktierung des inneren Kontaktabschnittes 6 mit der Kontaktfläche 3 allein bei geschlossenem Spritzgießwerkzeug 9 vorgenommen wird. Im Falle einer ergänzenden oder alternativen Kontaktierung bzw. Sicherung der Kontaktstelle kommen die optionalen, in den Fig. 2, 3 dargestellten Zugriffsfenster 14 zum Einsatz. Sofern beispielsweise gemäß Fig. 4 vor dem Schließen der Spritzgießform ein elektrisch leitendes Substrat 13 an Ort und Stelle gebracht wurde, kann dieses unabhängig vom Vorgang des Hinterspritzens mit Wärme beaufschlagt und dadurch aktiviert werden. Beispielsweise kann durch einen nicht dargestellten Formschieber des Spritzgießwerkzeuges 9, welcher das Zugriffsfenster 14 bildet, die erforderliche Wärme und/oder bei Bedarf auch Druck eingeleitet werden.

Alternativ kann es auch zweckmäßig sein, zunächst das Spritzgießwerkzeug 9 zu öffnen und dann in einem separaten Arbeitsschritt das elektrisch leitende Substrat 13 durch das Zugriffsfenster 14 hindurch zu erwärmen. Eine weitere Option besteht darin, das Substrat 13 nicht bereits vor dem Schließen des Spritzgießwerkzeuges 9 (Fig. 4) einzubringen, sondern erst später nach Öffnung des Spritzgießwerkzeuges 9 und ggf. auch nach Entnahme der Kunststoffabdeckung 1 durch das Zugriffsfenster 14 hindurch das Substrat 13 aufzutragen und dann zu aktivieren. Alternativ oder zusätzlich kann es auch zweckmäßig sein, durch das Zugriffsfenster 14 hindurch den inneren Kontaktabschnitt 6 mit der Kontaktfläche 3 zu verlöten oder zu verschweißen, oder elektrisch leitfähig zu vergießen bzw. elektrisch leitfähig zu lackieren. Jedenfalls soll sichergestellt werden, dass eine dauerhafte elektrisch leitende Verbindung entsteht. Im Anschluss hieran werden die Zugriffsfenster 14 verschlossen, indem sie zum Beispiel mit aushärtendem Flüssigkunststoff vergossen werden. Ggf. kann es auch ausreichen, einen geeigneten Stopfen in die Zugriffsfenster 14 einzustecken. Außerdem kann in Betracht kommen, in einem weiteren Spritzgießvorgang die Zugriffsfenster 14 dichtend auszuspritzen.

Die Fig. 7 bis 9 zeigen noch eine Variante des Spritzgusswerkzeuges 9 und des Verfahrens nach den Fig. 4 bis 6. Anstelle des zuvor gezeigten und beschriebenen Federelementes 21 kommt hier ein schematisch angedeuteter Aktuator 22 zum Einsatz. Der Aktuator kann ein Spindelantrieb oder dergleichen sein und ist im gezeigten Ausführungsbeispiel ein Hydraulikzylinder. Im ersten Verfahrensschritt nach Fig. 7 ist der Kontaktstift 4 mittels des Aktuators 22 zunächst soweit nach oben zurückgezogen, dass sein Kontaktabschnitt 6 beim Schließen der Werkzeughälften 11, 12 (Fig. 8) anfänglich nicht in Kontakt mit der Kontaktfläche 3 der Leiterbahn 2 kommt. Erst nachdem sich die Werkzeughälften 11, 12 gemäß Fig. 8 im geschlossenen Zustand befinden, wird der Kontaktstift 4 mittels des Aktuators 22 aus seiner Anfangsposition heraus (Fig. 7) nach unten um einen Zustellweg b verfahren, dabei gegen die Kontaktfläche 3 gedrückt (Fig. 8) und dort während des Spritzgießens gehalten (Fig. 9). Das Verschieben des Kontaktstiftes 4 mittels des Aktuators 22 kann aber auch schon während des Schließens der Werkzeughälften 11, 12 vorgenommen oder zumindest in Gang gesetzt werden. Der Aktuator 22 sorgt jedenfalls insbesondere für die Aufbringung einer definierten Anpresskraft des Kontaktabschnittes 6 an die Kontaktfläche 3, welche zusätzlich zur weiter oben beschriebenen Wärme für die Aktivierung des zwischenliegenden Substrats 13 und für eine zuverlässige Kontaktierung erforderlich ist. In den übrigen Merkmalen und Bezugszeichen stimmt das Ausführungsbeispiel der Fig. 7 bis 9 mit demjenigen der Fig. 4 bis 6 überein.

Anstelle einer passiven Beweglichkeit gegen die Vorspannkraft eines Federelementes 21 (Fig. 4 bis 6) oder der aktiven Bewegung mittels eines Aktuators 22 (Fig. 7 bis 9) kann auch eine Fixierung des Kontaktstiftes insbesondere in der oberen Werkzeughälfte 12 zweckmäßig sein. In diesem Falle kann ein Lage- bzw. ein Toleranzausgleich zwischen dem Kontaktabschnitt 6 und der Kontaktfläche 3 beispielsweise durch die Nachgiebigkeit des Substrats 13 und/oder durch eine nachgiebige Ausgestaltung des Kontaktstiftes 4 herbeigeführt werden.

## Patentansprüche

1. Verfahren zur Herstellung einer Kunststoffabdeckung (1) mit einer elektrischen Leiterbahn (2) und mit mindestens einem Kontaktstift (4), welcher mit einer Kontaktfläche (3) der Leiterbahn (2) verbunden ist, wobei der Kontaktstift (4) einen äußeren, freien Kontaktabschnitt (5) und angrenzend an die Leiterbahn (2) einen inneren Kontaktabschnitt (6) aufweist, umfassend folgende Verfahrensschritte:
- die Leiterbahn (2) wird auf eine Innenseite eines Kunststoffrohlings (7) aufgebracht;
- in eine erste Werkzeughälfte (11) eines Spritzgießwerkzeuges (9), welche in einem geschlossenen Zustand des Spritzgießwerkzeuges (9) einen Spritzraum (10) begrenzt, wird der Kunststoffrohling (7) als Einlegeteil derart eingelegt, dass seine Innenseite mit der Leiterbahn (2) im Spritzraum (10) liegt;
- in eine zweite Werkzeughälfte (12), welche im geschlossenen Zustand des Spritzgießwerkzeuges (9) ebenfalls den Spritzraum (10) begrenzt, wird der mindestens eine Kontaktstift (4) als Einlegeteil derart eingelegt, dass sein freier Kontaktabschnitt (5) außerhalb des Spritzraumes (10) liegt;
- Das Spritzgießwerkzeug (9) wird durch Zusammenfahren der beiden Werkzeughälften (11, 12) geschlossen, und der mindestens eine Kontaktstift (4) wird mit seinem inneren Kontaktabschnitt (6) gegen die Kontaktfläche (3) der Leiterbahn (2) gedrückt;
- Im Spritzgießwerkzeug (9) wird eine elektrische Kontaktierung des inneren Kontaktabschnittes (6) des mindestens einen Kontaktstiftes (4) mit der Kontaktfläche (3) der Leiterbahn (2) hergestellt;
- In den Spritzraum (10) wird Kunststoff eingespritzt, so dass die Innenseite des Kunststoffrohlings (7) mit der Leiterbahn (2) überspritzt und dabei eine Deckschicht (8) der Kunststoffabdeckung (1) gebildet wird;
- Das Spritzgießwerkzeug (9) wird geöffnet, und die solchermaßen gebildete Kunststoffabdeckung (1) wird einschließlich des mindestens einen Kontaktstiftes (4) aus dem Spritzgießwerkzeug (9) entnommen.

2. Verfahren nach Anspruch 1,
**dadurch gekennzeichnet, dass** der mindestens eine Kontaktstift (4) in der zweiten Werkzeughälfte (12) derart positioniert und gehalten wird, dass sein innerer Kontaktabschnitt (6) zunächst um einen Ausgleichsweg (a) gegenüber der späteren kontaktierten Position hervorsteht, dass der innere Kontaktabschnitt (6) beim Schließen des Spritzgießwerkzeuges (9) gegen die Kontaktfläche (3) der Leiterbahn (2) gedrückt wird, wobei der Kontaktstift (4) unter Ausnutzung zumindest eines Teils des Ausgleichsweges (a) beim Schließen des Spritzgießwerkzeuges (9) gegen eine Vorspannkraft eines Federelementes (21) zurückgedrückt wird, und wobei der innere Kontaktabschnitt (6) während des nachfolgenden Hinterspritzens durch die Vorspannkraft des Federelementes (21) auf der Kontaktfläche (3) der Leiterbahn (2) gehalten wird.

3. Verfahren nach Anspruch 1,
**dadurch gekennzeichnet, dass** der innere Kontaktabschnitt (6) des Kontaktstiftes (4) beim Schließen oder nach dem Schließen des Spritzgießwerkzeuges (9) mittels eines Aktuators (22) gegen die Kontaktfläche (3) der Leiterbahn (2) gedrückt und während des nachfolgenden Hinterspritzens auf der Kontaktfläche (3) der Leiterbahn (2) gehalten wird.

4. Verfahren nach einem der Ansprüche 1 bis 3,
**dadurch gekennzeichnet, dass** der mindestens eine Kontaktstift (4) in der zweiten Werkzeughälfte (12) an seinem freien Kontaktabschnitt (5) gehalten wird.

5. Verfahren nach einem der Ansprüche 1 bis 4,
**dadurch gekennzeichnet, dass** der innere Kontaktabschnitt (6) des Kontaktstiftes (4) bei geschlossenem Spritzgießwerkzeug (9) mit der Kontaktfläche (3) der Leiterbahn (2) elektrisch leitend stoffschlüssig kontaktiert wird.

6. Verfahren nach Anspruch 5,
**dadurch gekennzeichnet, dass** der innere Kontaktabschnitt (6) und/oder die Kontaktfläche (3) vor dem Schließen des Spritzgießwerkzeuges (9) mit einem elektrisch leitenden Substrat (13) versehen wird.

7. Verfahren nach Anspruch 6,
**dadurch gekennzeichnet, dass** das Substrat (13) für die Kontaktierung durch Druck, insbesondere durch den Anpressdruck des Federelementes (21) oder des Aktuators (22), und/oder durch Wärme, insbesondere durch die Wärme des eingespritzten Kunststoffes aktiviert wird.

8. Verfahren nach einem der Ansprüche 1 bis 7,
**dadurch gekennzeichnet, dass** beim Überspritzen der Innenseite des Kunststoffrohlings (7) im Bereich des inneren Kontaktabschnittes (6) und der Kontaktfläche (3) ein Zugriffsfenster (14) verbleibt, und dass durch das Zugriffsfenster (14) eine dauerhafte elektrische Verbindung zwischen dem inneren Kontaktabschnitt (6) des Kontaktstiftes (4) und der Kontaktfläche (3) der Leiterbahn (2) insbesondere durch Kleben, Vergießen, Lackieren, Schweißen oder Löten herbeigeführt wird.

9. Verfahren nach Anspruch 8,
**dadurch gekennzeichnet, dass** das Zugriffsfenster (14) nach Herbeiführung der dauerhaften Verbindung des inneren Kontaktabschnittes (6) mit der Kontaktfläche (3) dauerhaft und dicht insbesondere durch Vergießen oder erneutes Umspritzen elektrisch isolierend verschlossen wird.

10. Verfahren nach einem der Ansprüche 1 bis 9,
**dadurch gekennzeichnet, dass** der Kontaktstift (4) einen Halteabschnitt (15) aufweist, und dass der Kontaktstift (4) im Bereich seines Halteabschnittes (15) beim Hinterspritzen der Innenseite des Kunststoffrohlings (7) in die Deckschicht (8) eingespritzt und insbesondere dabei formschlüssig verkrallt wird.

11. Kunststoffabdeckung (1) mit einer elektrischen Leiterbahn (2) und mit mindestens einem Kontaktstift (4), welcher mit einer Kontaktfläche (3) der Leiterbahn (2) verbunden ist, wobei der Kontaktstift (4) einen äußeren, freien Kontaktabschnitt (5) und angrenzend an die Leiterbahn (2) einen inneren Kontaktabschnitt (6) aufweist, hergestellt mit dem Verfahren nach einem der Ansprüche 1 bis 10.
